# EUROPEAN PATENT SPECIFICATION

(11) **EP 3 646 231 B1**
(45) Date of publication and mention of the grant of the patent: **26.01.2022**
(21) Application number: 19723957.7
(22) Date of filing: 30.04.2019
(51) Int. Cl.: G06F 21/62, G06F 21/60, H04L 29/08, H04L 29/06, G06Q 30/02, H04W 12/02

(54) **DATA COLLECTION CONSENT TOOLS**
ZUSTIMMUNGSINSTRUMENTE FÜR DATENERFASSUNG
OUTILS DE CONSENTEMENT À LA COLLECTE DE DONNÉES

(30) Priority: 07.05.2018 US 201862667995 P
(43) Date of publication of application: 06.05.2020
(73) Proprietor: Google LLC, Mountain View, CA 94043 (US)
(72) Inventor: CHIRRAVURI, Varun Raj, New York, NY 10022 (US); SINGHAL, Nikhil, Mountain View, California 94043 (US); LIM, Lorna T., Mountain View, California 94043 (US); GREGOIRE, Andrés, Mountain View, California 94043 (US); YEHOSHUA, Ron Offer, Mountain View, California 94043 (US); GAZZOLA, Michael, Mountain View, California 94043 (US); JOHNSEN, Vegard, Mountain View, California 94043 (US)
(74) Representative: Suckling, Andrew Michael
(86) International application number: PCT/US2019/029968
(87) International publication number: WO 2019/217151

(56) References cited:
- US-A1- 2002 104 015
- US-A1- 2016 148 006
- US-A1- 2017 180 797

## Description

### FIELD

The present specification relates to privacy wall selection for electronic documents and electronic domains

### BACKGROUND

Digital content can be personalized to one or more users visiting webpages based on information related to the users.

US 2002/104015 proposes a method for privacy management that includes providing a linked collection of interactive resources through which a user is able to exchange information with an enterprise that provides the resources, and assigning respective, non-uniform privacy policies to at least some of the resources regarding use of the information that is exchanged through the resources. The user, accessing a given one of the resources, is provided with the respective privacy policy for that resource. At least a portion of the information that is associated with the given one of the resources is exchanged with the user subject to the provided privacy policy. US 2016/148006 proposes a privacy user interface for websites. In one or more implementations, website information associated with a website is detected responsive to navigating to the website using a web platform. The website information may include third party entities associated with the website, privacy settings of the website, and/or browser notifications associated with the website. The website information is then displayed in a privacy user interface to enable a user of the web platform to view the website information associated with the website. US 2017/ 180797 proposes a method that involves obtaining a third-party device identifier or user identifier corresponding to a client device; obtaining an opt-out flag indicative of whether a user of the client device has elected not to participate in third-party tracking corresponding to online activities; sending the third-party device identifier or user identifier, the opt-out flag, and a media identifier to an audience measurement entity, the media identifier corresponding to media accessed via the Internet; and receiving, from the audience measurement entity, an impression report corresponding to the media.

### SUMMARY

Innovative aspects of the subject matter described in this specification may be embodied in methods that include the actions of providing a publisher with a privacy control user interface that includes one or more controls that enable the publisher to assign one privacy wall to each domain-purpose pair; determining that the publisher has created an additional privacy wall for a specific domain-purpose pair that already has an existing privacy wall; in response to determining that the publisher has created the additional privacy wall, restricting the specific domain-purpose pair to a single active privacy wall, including: in response to creation of the additional privacy wall: enabling only one of the existing privacy wall and the additional privacy wall to be in an active state at any given time; and maintaining any privacy wall that is not in the active state in an inactive state; detecting a transition of a specific privacy wall from the inactive state to the active state; and in response to detecting the transition of the specific privacy wall from the inactive state to the active state, transitioning a different privacy wall from the active state to the inactive state.

Other embodiments of these aspects include corresponding systems, apparatus, and computer programs, configured to perform the actions of the methods, encoded on computer storage devices.

These and other embodiments may each optionally include one or more of the following features. For instance, triggering display of a warning message in response to creation of the additional privacy wall while another privacy wall is in the active state; and setting the additional privacy wall to the inactive state when creation of the additional wall occurs while another privacy wall is in the active state. Providing a control that enables the publisher to create a vendor list for a specified purpose; monitoring a number of vendors added to the vendor list for the specified purpose; triggering display of a warning message when the publisher attempts to increase the number of vendors in the vendor list for the specified purpose beyond a specified maximum number of vendors. Providing the control that enables the publisher to create the vendor list includes providing one or more controls that enables the publisher to create a different vendor list for each of two or more different purposes. Detecting user interaction with a consent element presented in a specific privacy wall presented at a client device of a specific user; storing, in a cookie, consent data indicating that the specific user has consented to the use of user data for a given purpose corresponding to the domain-purpose pair; and enabling the user data of the specific user to be used for the given purpose while the consent of the specific user is valid. In response to detecting user interaction with the consent element, starting a consent validity timer for the domain-purpose pair; when the consent validity timer reaches a pre-specified value, resetting the consent for the domain-purpose pair; and after resetting the consent for the domain-purpose pair, requiring (i) presentation of the specific privacy wall or a different privacy wall, and (ii) a new interaction with the consent element prior to use of the user data of the specific user for the given purpose corresponding to the domain-purpose pair. Storing the consent data indicating that the specific user has consented to the use of user data in the cookie includes storing the consent data in the publisher's domain with a default naming convention that enables other entities that differ from the publisher to read the cookie. Storing, within the cookie, a list of third party identifiers and a corresponding consent identifier for each third party identified by the third party identifier, wherein the consent identifier specifies whether the specific user has consented to that third party using the user data of the specific user. Triggering presentation of a change consent control that is presented on a publisher's page for the publisher after the specific user has consented to the use of the user data by the publisher; detecting user interaction with the change consent control that enables the specific user to change their consent selection; detecting user interaction with a revoke consent control that revokes a prior consent to the use of the user data by the publisher; and updating the cookie to indicate that the specific user does not consent to the publisher using the user data. After storing the consent data in the cookie, determining that a vendor list of the publisher has been modified to add an additional vendor; in response to determining that the vendor list has been modified to add the additional vendor, triggering presentation of a new instance of a privacy wall that requests renewed consent from the specific user and informing the specific user of the additional vendor that was added to the vendor list. Detecting user interaction with a non-consent control indicating that the specific user does not consent to use of the user data by the additional vendor; and in response to detecting the user interaction with the non-consent control, updating the cookie to indicate that the specific user does not consent to the use of the user data for the domain-purpose pair corresponding to the vendor list.

The features further include triggering presentation of the specific privacy wall that includes both of an explore consent control and a purchase ad removal pass control, wherein user interaction with the explore consent control triggers presentation of data related to consent options and interaction with the purchase ad removal pass initiates a workflow that enables the specific user to obtain an ad free experience. Interaction with the explore consent control triggers presentation of a user interface that includes multiple different opt-in options for granting consent to use user data. The user interface lists of one or more purposes that are capable of using the user data and corresponding domains that utilize the one or more purposes, and wherein the user interface includes controls to selectively consent to the user data by one or more of the corresponding domains for each of the one or more purposes. Triggering presentation of the specific privacy wall is performed in response to detecting that the user device has a specified geographic location indicator. Storing the consent data in the cookie includes storing a consent record entry that lists a set of consented third parties that the specific user has consented to using the user data and a set of unconsented third parties that the specific user has not consented to using the user data. The cookie includes a counter value specifying how long it has been since the specific user provided consent. The cookie includes a set of vendors that are included in vendor lists for the set of consented third parties and a different set of vendors that are included in the vendor lists for the set of unconsented third parties. Receiving, from the client device, a request for a page provided by the publisher; inspecting the cookie in response to the request; determining, based on the inspection of the cookie, a current consent status of the specific user relative to use of the user data for at least one domain-purpose pair; and responding to the request based on the current consent status. Responding to the request based on the current consent status includes responding to the request by triggering presentation of the page in response to determining that the current consent status allows for the publisher to load the page without prompting the user for consent; and responding to the request by triggering presentation of the specific privacy wall instead of the page in response to determining that the current consent status does not allow for the publisher to load the page without prompting the user for consent. Determining a current consent status of the specific user includes triggering a script that invokes a script that inspects the cookie for the current consent status. Triggering the script includes triggering a script that determines whether the cookie exists for the specified user, a last refresh time for the cookie, and a geographic location of the client device. In response to determining that the last refresh time for the cookie is not within a specified period, refreshing the cookie with information about vendors that are included in a vendor list of the publisher. In response to determining that the vendors included in the vendor list of the publisher match the set of vendors identified in the cookie, refreshing the cookie and not requiring presentation of an update consent user interface. In response to determining that the vendors included in the vendor list of the publisher do not match the set of vendors identified in the cookie, refreshing the cookie and requiring presentation of an update consent user interface.

Particular implementations of the subject matter described in this specification can be implemented so as to realize one or more of the following advantages. For example, user privacy can be improved by enabling users to specify whether data related to the user is used for purposes of personalizing content that is delivered to the user. Additionally, publishers are able to ensure that users that visit their sites are able to specify whether data related to the user is used to personalize content that is delivered to the user. Users are provided the opportunity to specify which entities are allowed to utilize their personal data. Publishers are able to provide a convenient mechanism ensuring that users are provided the opportunity to modify how their personal data is used a specified times even after they have initially consented to the use of their personal data. Users are provided the opportunity to limit the use of their personal data when there is a change to the list of entities that are considered vendors of the publisher. In some situations, implementations of the subject matter provide for the efficient usage of computer resources by providing personalized digital content with electronic documents (webpages) to a subset of users. Selective allocation of computer resources to a selected population of users that is maximized for exposure of personalized digital content while preventing exposure of the personified digital content to an unselected population of users. That is, the computer resources are made efficient by limiting the exposure of the personalized digital content to a selected population of users. This avoids expending computing resources for transmission of the personalized digital content to the unselected population of users, with the computing resources being utilized efficiently in the transmission of the personalized digital content to the selected population of users. Furthermore, this reduces network congestion and increases network efficiency as a result of transmitting the personalized digital content to a subset of the population of users. Network bandwidth is conserved by transmitting the personalized digital content from the servers to a selected population of the computing devices as opposed to a larger set of computing devices.

The details of one or more embodiments of the subject matter described in this specification are set forth in the accompanying drawings and the description below. Other potential features, aspects, and advantages of the subject matter will become apparent from the description, the drawings, and the claims.

### DESCRIPTION OF DRAWINGS

FIG. 1 depicts a system for privacy wall selection for electronic documents and electronic domains.
FIGs. 2 and 4 illustrate consent user interfaces.
FIG. 3 illustrates a consent user interface including different opt-in options for granting consent to use user data.
FIGs. 5A, 5B, 5C, 6A, 6B and 6C illustrate workflows of a progression related to the consent user interface.
FIG. 7 is a flowchart of an example process for privacy wall selection for electronic documents and electronic domains.
FIG. 8 depicts an example computing system that may be used to implement the techniques described herein.

### DETAILED DESCRIPTION

This document describes methods, systems, and computer readable medium for privacy wall selection for electronic documents and electronic domains. Specifically, digital content publishers can create, configure, and deliver consent-messaging for their site/domain that queries users (e.g., site visitors) whether they would like to allow data sharing for personalized digital content delivery (e.g., digital advertisements) and measurement of such sharing. Additionally, the publishers are provided the ability to offer an alternate choice to users that do not consent to personalize digital content delivery - i) allow users to view non-personalized digital content or ii) pay a nominal fee to view pages of the domain without additional personalized content (e.g., advertisements). The system can further store the user's preference -- whether to i) consent to data sharing for personalized digital content delivery or B) pay a nominal fee to become a "contributor" for non-personalized digital content. The system can automatically detect a user's state when available and not show consent messaging to users who have previously made a choice. For such users, the system can automatically show personalized digital content or show non personalized digital content. If the user is a contributor, the system can remove digital content from the electronic document prior to rendering.

In short, the system can provide a user facing user interface that includes a message that requires a user to actively choose to view a website that does not require users to consent to access the site; and provides an alternative using non-personalized digital content delivery, or become a contributor. The system utilizes a cookie to store, update, and manage user data-sharing consent; and an API for communication to preserve/represent user choice to determine which digital content (personalize or non-personalized) to provide for display. The system further creates and maintains vendor list(s) for user consent that includes a single, de-duped list of digital content providers used on a particular web page.

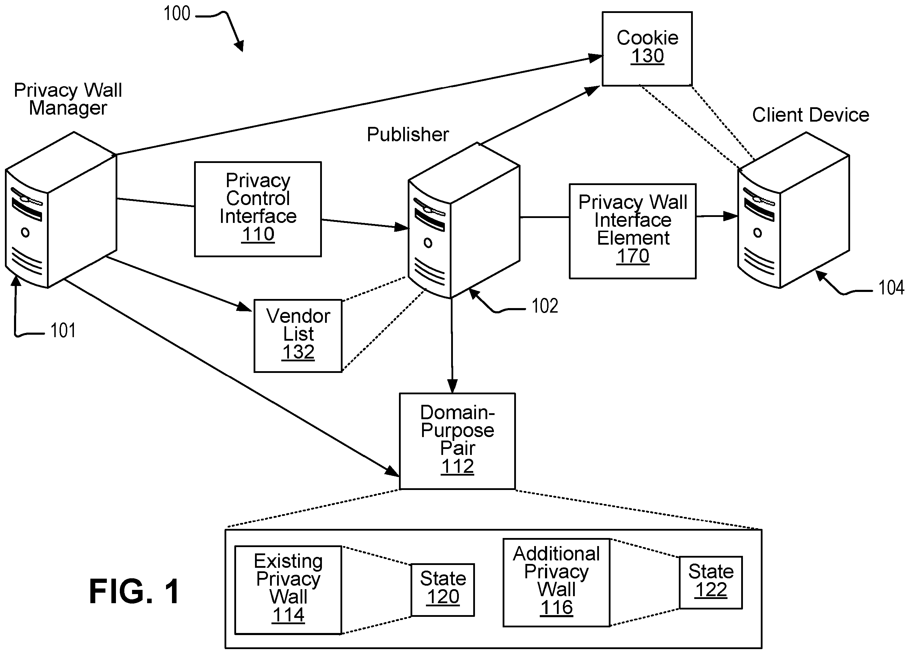

FIG. 1 depicts a system 100 for privacy wall selection for electronic documents and electronic domains. The system 100 includes a privacy wall manager 101, a publisher computing device 102, and a client computing device 104. The privacy wall manager 101 can be in communication with the publisher computing device 102 over one or more networks (not shown); and the publisher computing device 102 can be in communication with the client computing device 104 over one or more networks (not shown). In some examples, the privacy wall manager 101 and the publisher computing device 102 can each include one or more modules, and each can be respectively implemented as a combination of computing systems or in a same set of physical hardware.

The system 100 can create and manage (electronic) privacy walls of domains, and domain-purpose pairs, described further herein. The privacy walls can be associated with states, including an active state, a paused state, and a disabled state. In short, the active state of a domain-purpose pair allows electronic transmission of electronic content of a domain of a domain-purpose pair; an inactive (or paused) state indicates that nothing is provided on the underlying domain-purpose pair; and a disabled state indicates that the underlying domain may fail to comply with one or more required standards. As used throughout this document, the term purpose refers to the reason for which data is used, and the phrase domain-purpose pair specifies a combination of a specific online domain that can collect user data and a purpose for which that user data is potentially used. The system 100 provides that for each domain-purpose pair, there is at most a single active privacy wall that is active at a time.

In some implementations, the privacy wall manager 101 provides the publisher computing device 102 a privacy control user interface 110 that includes one or more controls that enable the publisher computing device 102 to assign one privacy wall to each domain purpose pair, e.g., the specific domain-purpose pair 112. The specific domain-purpose pair 112 can include an existing privacy wall 114 that includes a state 120. The publisher computing device 102 can create an additional privacy wall 116 for the specific domain-purpose pair 112 that includes a state 122. In some examples, the creation of the additional privacy wall 116 by the publisher computing device 102 can be created in the inactive (paused) state. In some examples, the publisher computing device 102 copies the existing privacy wall 112 to create the additional privacy wall 116 (and created in the inactive state).

The privacy wall manager 101 determines that the publisher computing device 102 has created the additional privacy wall 116 for the specific domain-purpose pair 112. The privacy wall manager 101, in response to determining that the publisher computing device 102 has created the additional privacy wall 116, can restrict the specific domain purpose pair 112 to a single active privacy wall. Specifically, the privacy wall manager 101, in response to the creation of the additional privacy wall 116, enables only one of the existing privacy wall 114 and the additional privacy wall 116 to be in an active state at any given time. For example, the privacy wall manager 101 enables the state 120 of the existing privacy wall 114 to be in the active state at a first time. Further, privacy wall manager 101 maintains the privacy wall that is not in the active state in an inactive state. For example, the privacy wall manger 101 enables the state 122 of the additional privacy wall 116 to be in an inactive state.

The privacy wall manager 101 can detect a transition of a specific privacy wall from the inactive state to the active state. For example, the privacy wall manager 101 can detect a transition of the state 122 of the additional privacy wall 116 from the inactive state to the active state. The privacy wall manager 101, in response to detecting the transition of the specific privacy wall from the inactive state to the active state, transitions a different privacy wall from the active state to the inactive state. For example, the privacy wall manager 101 transitions the state 120 of the existing privacy wall 114 from the active state to the inactive state.

In some examples, the privacy wall manager 101, in response to the creation of the additional privacy wall 116 while the state 120 of the of the existing privacy wall 114 is active, triggers display of a warning message at the publisher computing device 102. Furthermore, the privacy wall manager 101 sets the state 122 of the additional privacy wall 116 to an inactive state when the creation of the additional privacy wall 116 occurs while the state 120 of the existing privacy wall 114 is active.

In some examples, the privacy wall manager 101 provides a control to the publisher computing device 102 that enables the publisher computing device 102 to create a vendor list 132 for a specified purpose. For example, the vendor list 132 can be for the specific domain-purpose pair and/or the user accessing the specific domain. In some examples, the control enables the publisher computing device 102 to create a different vendor list 132 for each of two or more different purposes. The privacy wall manger 101 monitors the number of vendors added to the vendor list 132 for the specified purpose, and triggers display of a warning message at the publisher computing device 120 when the publisher computing device 120 attempts to increase the number of vendors in the vendor list 132 for the specified purpose beyond a specified maximum number of vendors. The term vendor can additionally be referred to as an ad technology provider (ATP).

In some examples, the publisher computing device 102 can create the vendor list 132 using web-property codes. Specifically, the publisher computing device 102 can add any number of web property codes and/or DoubleClick Ad Exchange (AdX), DoubleClick for Publishers (DFP), and/or Adsense network codes for the domain such that the vendor list 132 automatically populated. The warning message can further be provided when the publisher computing device 102 has set non-personalized digital content for a particular web property code that has been added. In some examples, the publisher computing device 102 can create the vendor list 132 using manual addition. That is, the publisher computing device 102 manual adds the vendors to the vendor list 132 on a per-vendor basis.

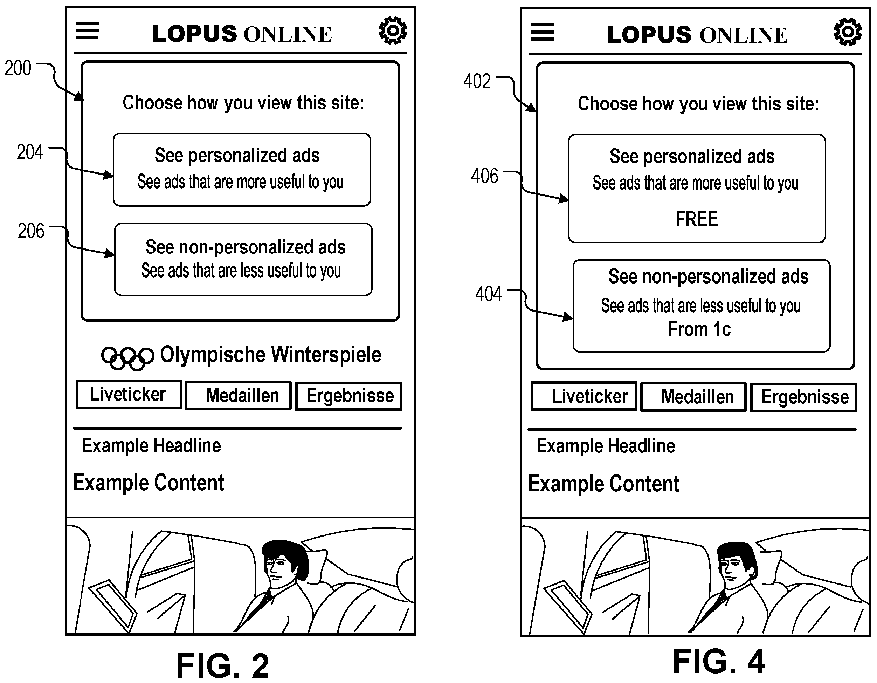

The publisher computing device 102 can provide a consent user interface 170 to the client computing device 104. The privacy wall manager 101 and/or the publisher computing device 102 can further detect user interaction with a consent element (of the consent user interface) presented in a specific privacy wall presented at the client computing device 104 of a specific user. As illustrated in FIG. 2, a consent element 200 is provided that can be presented on a graphical user interface (GUI) of the client computing device 104. The consent element 200 can include user interactable interface elements 204, 206 for providing or declining such consent. For example, the user can select the interface element 204 to provide consent to the use of user data for the given purpose corresponding to the domain-purpose pair. The privacy wall manger 101 can store, in a cookie 130, consent data that indicates that the specific user has consented to the use of user data for a given purpose corresponding to the domain-purpose pair. The privacy wall manager 101 can enable the user data of the specific user to be used for the given purpose while the consent of the specific use is valid.

In some examples, the publisher computing device 102 can create the vendor list 132 for display in the consent user interface 170. However, upon loading of the web page provided by the publisher computing device 102, the publisher computing device 102 can utilize the web property codes and IDs to call an advertising server and dynamically repopulate the vendor list 132. This is done in response to determining that a) the consent data of the the cookie 130 matches the actual vendors that are being served and b) the vendor list 132 meets the required specifications. Thus, the privacy wall manager 101 can dynamically determine which vendors can have access to user consent data through various ad serving platforms on each web page rendered.

In some examples, the consent data of the cookie 130 is stored in the publisher's domain. For example, the cookie 130 is stored by the client computing device 104 and in the publisher's domain. The consent data of the cookie 130 can be stored using a default naming convention that enables entities other than the publisher computing device 102 to read the cookie 130. For example, other entities (not shown) that have access to the cookie 130 are able to read the cookie 130 given the default naming convention used with the cookie 130.

In some examples, the publisher computing device 102 stores, within the cookie 130, a list of third party identifiers and a corresponding consent identifier for each third party identified by the third party identifier. The consent identifier can specify whether the specific user has consented to that third party using the user data of the specific user. The cookie 130 can also store a consent date (or re-consent date) for the consent provided by the specific user for that third party.

In some examples, the privacy wall manager 101 and/or the publisher computing device 102 triggers presentation of a change consent control that is presented on electronic webpage provided by the publisher computing device 102 after the specific user has consented to the use of the user data by the publisher. That is, the publisher computing device 102, in response to a trigger form the privacy wall manager 101, provides a change consent control on the GUI of the client computing device 104. The publisher computing device 102 can detect user interaction with the change consent control that enables the specific user to change their consent selection, and/or detect user interaction with a revoke consent control that revokes a prior consent to the use of the user data by the publisher computing device 102. In other words, the user is able to change their consent status for any reason and on any visit to a participating website. In some cases, the change consent control is an interface element that can be an expandable notification presented on the webpage that when selected, expands to the original consent workflow. The publisher computing device 102 can update the cookie 130 to indicate that the specific user does not consent to the publisher computing device 102 using the user data.

In some examples, the privacy wall manager 101 and/or the publisher computing device 102, in response to detecting user interaction with the consent element, starts a consent validity timer for the domain-purpose pair. That is, the validity timer tracks an initialization of the consent given by the particular user with the consent element for the domain-purpose pair. When the consent validity timer reaches a pre-specified value (e.g., 1 month, 6, months, 12 months), the privacy wall manager 101 resets the consent for the domain-purpose pair. That is, the consent previously provided by the user for the user of the user data by the publisher computing device 102 is reset. After the consent for the domain-purpose pair is reset, the privacy wall manager 101 requires (i) presentation of the specific privacy wall or a different privacy wall and (ii) a new interaction with the consent element prior to use of the user data of the specific user for the given purpose corresponding to the domain-purpose pair. For example, the privacy wall manager 101 can require presentation of the existing privacy wall 114 or the additional privacy wall 116 based on the states 120 and 122, respectively. Additionally, the privacy wall manager 101 can require a new interaction with the consent element 200 prior to use of the user data for the specific user for the given purpose corresponding to the specific domain-purpose pair 112.

In some examples, after the publisher computing device 102 stores the consent data in the cookie 130, the privacy wall manager 101 determines that the vendor list 132 of the publisher computing device 102 has been modified to add an additional vendor. That is, the publisher computing device 102 adds an additional vendor to the vendor list 132. The privacy wall manager 101, in response to determining that the vendor list 132 has been modified to add the additional vendor, triggers presentation of a new instance of the privacy wall through the publisher computing device 102 that is presented on an electronic webpage of the publisher. The new instance of the privacy wall that requests renewed consent from the specific user, and further informs the specific user of the additional vendor that was added to the vendor list 132. In some examples, the new instance additionally includes a web link to an electronic document that displays the previous vendors of the vendor list 132 - e.g., previously consented vendors.

In some examples, the privacy wall manager 101 and/or the publisher computing device 102 detects user interaction with a non-consent control indicating that the specific user does not consent to the user of the user data by the additional vendor. For example, after providing the new instance of the privacy wall requesting renewed consent from the specific user, the privacy wall 101 detects that the specific user does not provide such consent. The privacy wall manager 101, in response to detecting that the user interaction with the non-consent control, updates the cookie 130 to indicate that the specific user does not consent to the use of the user data for the specific domain-purpose pair 112 corresponding to the vendor list 132. Further, the cookie 130 can be updated to note that the specific user does not consent to the use of the user data for all of the vendors of the vendor list 132. In some examples, the publisher computing device 102 can update the cookie 130 to indicate that the specific user does not consent to the use of the user data for the specific domain-purpose pair 112 corresponding to the vendor list 132. In the illustrated example of FIG. 2, the user can select the interface element 206 to provide non-consent to the use of user data for the given purpose corresponding to the domain-purpose pair 112.

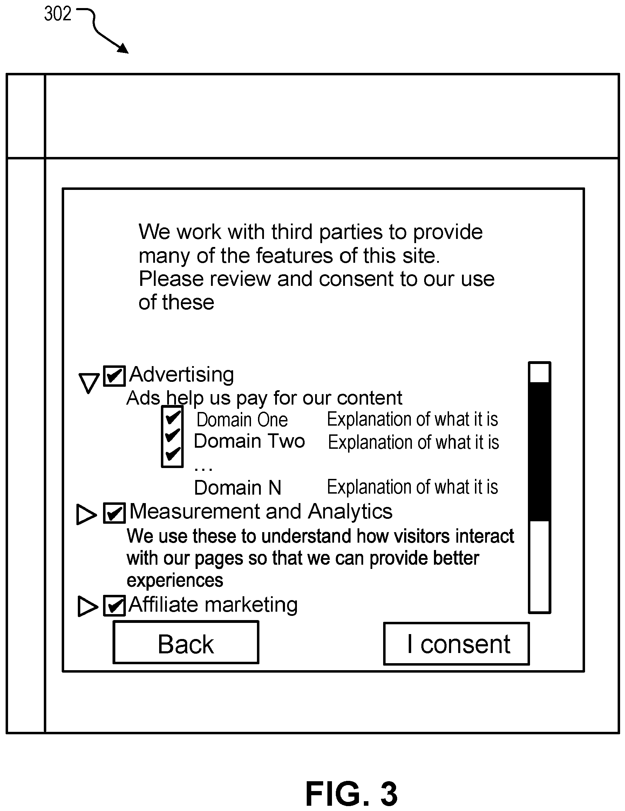

In some examples, the change consent control that is presented on the electronic webpage provided by the publisher computing device 102 includes an explore consent control interface element. For example, referring to FIG. 2, the interface element 204 can provide the explore consent control interface. To that end, when the interface element 204 is selected by the specific user, presentation of data is triggered that is related to consent options. For example, referring to FIG. 3, the selection of the interface element 204 triggers presentation of a user interface 302 (overlay) that includes multiple different opt-in options for granting consent to use user data. The user interface 302 includes a listing of purposes that are capable of using the user data and corresponding domains that utilize the one or more purposes. For example, as illustrated in FIG. 3, the listing of purposes includes "advertising," "measurement and analytics," and "affiliate marketing;" however, other purposes are possible. The user interface 302 further includes controls to selectively consent to the use of the user data by the one or more of the corresponding domains for each of the one or more purpose. For example, the user interface 302 includes checkboxes indicating consent (checked) and/or no consent (not checked).

In some examples, the change consent control that is presented on the electronic webpage provided by the publisher computing device 102 includes a purchase ad removal pass control. For example, referring to FIG. 4, a change consent control interface 402 is displayed that includes an user interactable user interface element 404 that is related to the purchase ad removal pass control. To that end, when the interface element 404 is selected by the specific user, a workflow is initiated that enables the specific user to obtain an ad free experience. The change consent control interface 402 can further include an user interactable user interface element 406 similar to the interface element 204 of FIG. 2 - that is, the user can select the interface element 406 to provide consent to the use of user data for the given purpose corresponding to the domain-purpose pair 112.

In some examples, the change consent control is presented on the electronic webpage provided by the publisher computing device 102 in response to detecting that the user computing device 104 has a specified geographic location indicator. For example, the privacy wall manager 102 can determine the geographic location indicator of the user computing device 104, and based on the geographic location of the geographic location indictor, present the change consent control, or present a particular (of many) change consent control specific for the geographic location.

In some examples, the publisher computing device 102, when storing the consent data in the cookie 130, further stores a record entry that lists a set of consented third parties that the specific user has consented to using the user data and a set of unconsented third parties that the specific user has not consented to using the user data. In some examples, the publisher computing device 102, when storing the consent data in the cookie 130, further stores a counter value specifying how long it has been since the specific user provided consent. For example, the counter value corresponds to the validity timer that tracks an initialization of the consent given by the particular user with the consent element for the domain-purpose pair. In some examples, the publisher computing device 102, when storing the consent data in the cookie 130, further stores a listing of the set of vendors that are included in the vendor list 132 for the set of consented third parties and a different set of vendors that are included in the vendor list 132 for the set of unconsented third parties.

In some examples, after storing the cookie 130, the publisher computing device 102 can receive a request for the electronic webpage that is provided by the publisher computing device 102. The publisher computing device 102 can access the cookie 130 from the client computing device 104, and inspect the cookie 130 in response to the request for the electronic webpage. The publisher computing device 102 can determine, based on the inspection of the cookie 130, a current consent status of the specific user relative to the use of the user data for at least one domain-purpose pair. For example, the cookie 130 can indicate that the publisher computing device 102 is able to load the electronic webpage, or indicate that the publisher computing device 102 is not able to load the electronic webpage. To that end, the publisher computing device 102 responds to the request based on the current consent status. That is, in some examples, the publisher computing device 102 can respond to the request by triggering presentation of the web page in response to determining that the current consent status allows for the publisher computing device 102 to load the web page without prompting the user for consent. Additionally, in some examples, the publisher computing device 102 can respond to the request by triggering presentation of the specific privacy wall instead of the web page in response to determining that the current consent status does not allow for the publisher computing device 102 to load the web page without prompting the user for consent. For example, if the specific user visits the webpage after making the consent decision, the current consent status of the cookie 130 is only called once.

In some examples, the publisher computing device 102 determines the current consent status of the specific user by triggering a script that invokes a script that inspects the cookie 130 for the current consent status. For example, triggering the script can include determining whether then cookie 130 exists for the specific user, a last refresh time for the cookie 130, and a geographic location of the client computing device 104. In some examples, the script is invoked only when the cookie 130 exists for the specific user and the last refresh time for the cookie 130 is less than a threshold time (e.g., 1 day). When the last refresh time of the cookie 130 is greater than the threshold time (not within a specified period), the publisher computing device 102 can refresh the cookie 130 with information about vendors that are included in the vendor list 132 of the publisher computing device 104.

In some examples, the publisher computing device 102 can determine, in response to inspecting the cookie 130, determining that the vendors included in the vendor list 132 match the set of vendors identified in the cookie 130. When the vendors included in the vendor list 132 match the set of vendors identified in the cookie 130, the publisher computing device 102 does not require presentation of an update consent user interface. In some cases, the publisher computing device 102 refreshes the cookie 130 and requires presentation of an update consent user interface.

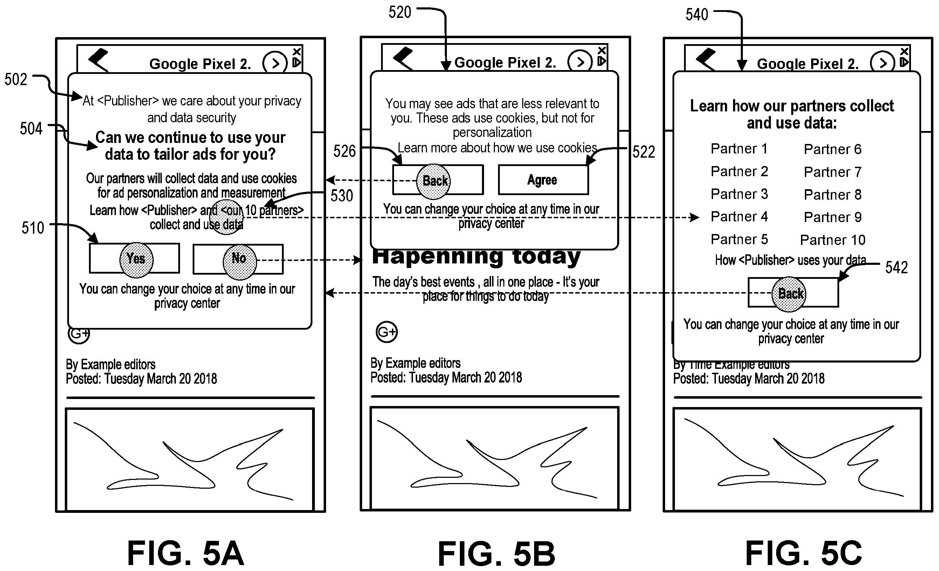

FIGs. 5A-5C illustrates a workflow of a progression related to the consent user interface. Specifically, FIG. 5A illustrates the consent user interface 502 including text 504 describing the use of user data for the given purpose corresponding to the domain-purpose pair 112, and further includes user interactable interface element 510 for providing consent, and user interactable interface element 512 for declining consent. The user can select the interface element 510 to provide consent to the use of user data for the given purpose corresponding to the domain-purpose pair 112. Further, the user can select the interface element 512 to decline consent to the user of user data for the given purpose corresponding to the domain-purpose pair 112. In response to declining consent, an updated consent user interface 520 is provided that includes interface element 522 for consenting to use of non-personalization of digital content to be provided (e.g., on the webpage of the publisher computing device 102). The user interface 520 further includes an interface element 526 for transitioning back to the user interface 502 of FIG. 5A Further, the user interface 502 of FIG. 5A can further a link 530, that when selected, provides the user interface 540 of FIG. 5C. The user interface 540 includes a listing of vendors (e.g., of the vendor list 132) for the domain-purpose pair 112. The user interface 540 further includes an interface element 542 for transitioning back to the user interface 502 of FIG. 5A.

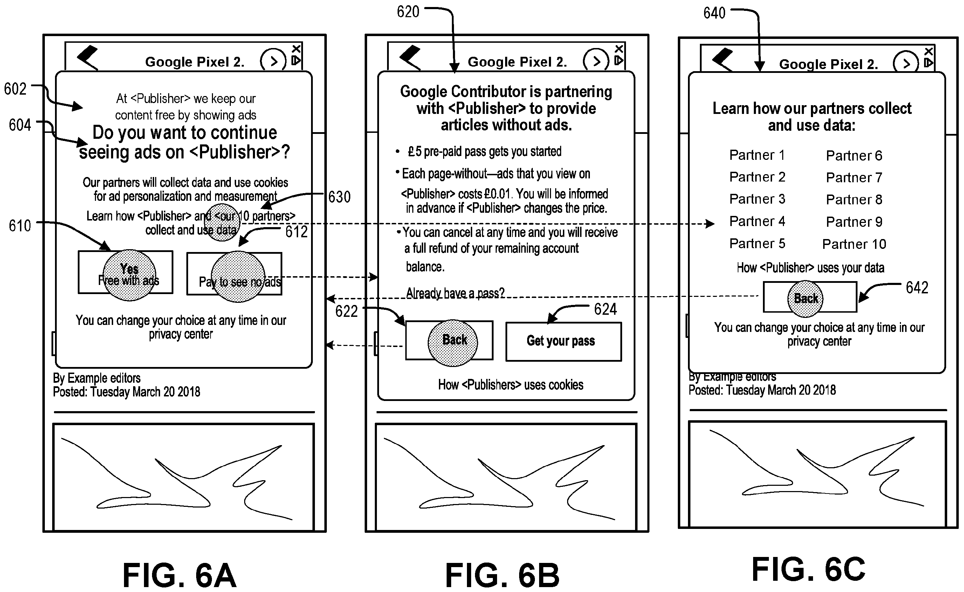

FIGs. 6A-6C illustrate a workflow of a further progression related consent user interface. Specifically, FIG. 6A illustrates the consent user interface 602 including text 604 describing the use of user data for the given purpose corresponding to the domain-purpose pair 112, and further includes user interactable interface element 610 for providing consent, and user interactable interface element 612 for declining consent. The user can select the interface element 610 to provide consent to the use of user data for the given purpose corresponding to the domain-purpose pair 112. Further, the user can select the interface element 612 to decline consent to the user of user data for the given purpose corresponding to the domain-purpose pair 112. In response to declining consent, an updated consent user interface 620 is provided that includes interface element 624 for purchasing an ad removal pass. The user interface 620 further includes an interface element 622 for transitioning back to the user interface 602 of FIG. 6A Further, the user interface 602 of FIG. 6A can further include a link 630, that when selected, provides the user interface 640 of FIG. 6C. The user interface 640 includes a listing of vendors (e.g., of the vendor list 132) for the domain-purpose pair 112. The user interface 650 further includes an interface element 642 for transmitting back to the user interface 602 of FIG. 6A.

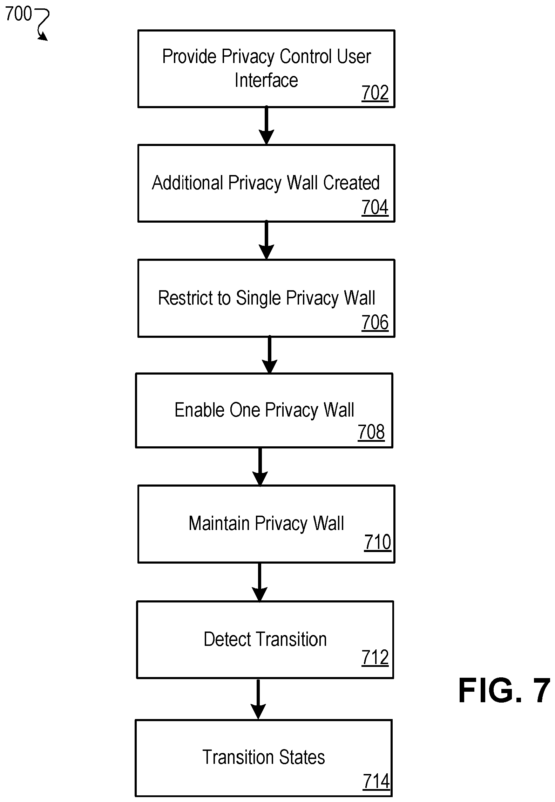

FIG. 7 illustrates an example process 700 for privacy wall selection for electronic documents and electronic domains. The process 700 can be performed, for example, by the system 100, or another data processing apparatus. The process 700 can also be implemented as instructions stored on a computer storage medium, and execution of the instructions by one or more data processing apparatus cause the one or more data processing apparatus to perform some or all of the operations of the process 700.

The privacy wall manager 101 provides the publisher computing device 102 a privacy control user interface 110 that includes one or more controls that enable the publisher computing device 102 to assign one privacy wall to each domain purpose pair (702). The privacy wall manager 101 determines that the publisher computing device 102 has created the additional privacy wall 116 for the specific domain-purpose pair 112 (704). The privacy wall manager 101, in response to determining that the publisher computing device 102 has created the additional privacy wall 116, restricts the specific domain purpose pair 112 to a single active privacy wall (706). The privacy wall manager 101, in response to the creation of the additional privacy wall 116, enables only one of the existing privacy wall 114 and the additional privacy wall 116 to be in an active state at any given time (708). The privacy wall manager 101 maintains the privacy wall that is not in the active state in an inactive state (710). The privacy wall manager 101 can detect a transition of a specific privacy wall from the inactive state to the active state (712). The privacy wall manager 101, in response to detecting the transition of the specific privacy wall form the inactive state to the active state, transitions a different privacy wall from the active state to the inactive state (714).

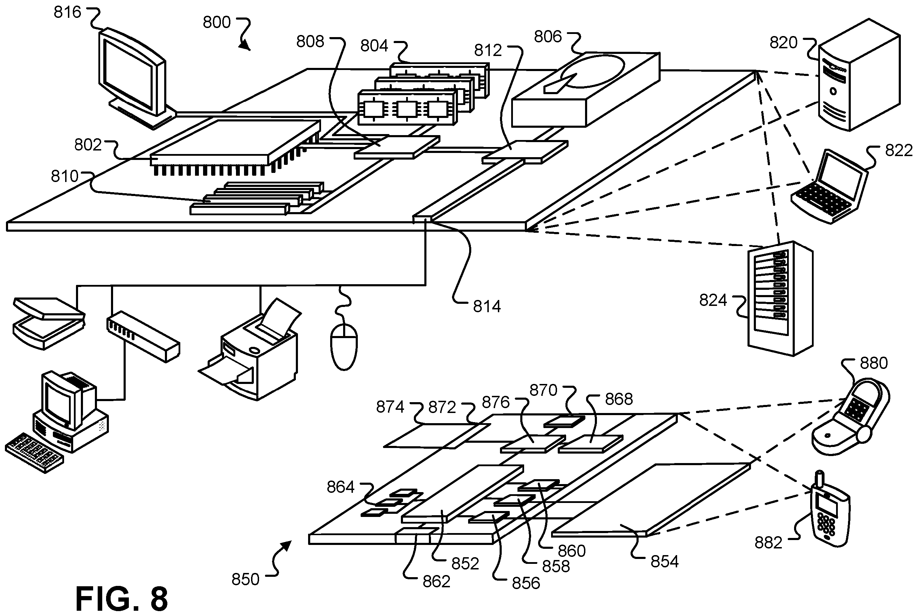

FIG. 8 shows an example of a generic computer device 800 and a generic mobile computer device 850, which may be used with the techniques described here. Computing device 800 is intended to represent various forms of digital computers, such as laptops, desktops, workstations, personal digital assistants, servers, blade servers, mainframes, and other appropriate computers. Computing device 850 is intended to represent various forms of mobile devices, such as personal digital assistants, cellular telephones, smartphones, and other similar computing devices. The components shown here, their connections and relationships, and their functions, are meant to be exemplary only, and are not meant to limit implementations of the inventions described and/or claimed in this document.

Computing device 800 includes a processor 802, memory 804, a storage device 806, a high-speed interface 808 connecting to memory 804 and high-speed expansion ports 810, and a low speed interface 812 connecting to low speed bus 814 and storage device 806. Each of the components 802, 804, 806, 808, 810, and 812, are interconnected using various busses, and may be mounted on a common motherboard or in other manners as appropriate. The processor 802 may process instructions for execution within the computing device 800, including instructions stored in the memory 804 or on the storage device 806 to display graphical information for a GUI on an external input/output device, such as display 816 coupled to high speed interface 808. In other implementations, multiple processors and/or multiple buses may be used, as appropriate, along with multiple memories and types of memory. Also, multiple computing devices 800 may be connected, with each device providing portions of the necessary operations (e.g., as a server bank, a group of blade servers, or a multiprocessor system).

The memory 804 stores information within the computing device 800. In one implementation, the memory 804 is a volatile memory unit or units. In another implementation, the memory 804 is a non-volatile memory unit or units. The memory 804 may also be another form of computer-readable medium, such as a magnetic or optical disk.

The storage device 806 is capable of providing mass storage for the computing device 800. In one implementation, the storage device 806 may be or contain a computer-readable medium, such as a floppy disk device, a hard disk device, an optical disk device, or a tape device, a flash memory or other similar solid state memory device, or an array of devices, including devices in a storage area network or other configurations. A computer program product may be tangibly embodied in an information carrier. The computer program product may also contain instructions that, when executed, perform one or more methods, such as those described above. The information carrier is a computer- or machine-readable medium, such as the memory 804, the storage device 806, or a memory on processor 802.

The high speed controller 808 manages bandwidth-intensive operations for the computing device 800, while the low speed controller 812 manages lower bandwidth-intensive operations. Such allocation of functions is exemplary only. In one implementation, the high-speed controller 808 is coupled to memory 804, display 816 (e.g., through a graphics processor or accelerator), and to high-speed expansion ports 810, which may accept various expansion cards (not shown). In the implementation, low-speed controller 812 is coupled to storage device 806 and low-speed expansion port 814. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 800 may be implemented in a number of different forms, as shown in the figure. For example, it may be implemented as a standard server 820, or multiple times in a group of such servers. It may also be implemented as part of a rack server system 824. In addition, it may be implemented in a personal computer such as a laptop computer 822. Alternatively, components from computing device 800 may be combined with other components in a mobile device (not shown), such as device 850. Each of such devices may contain one or more of computing device 800, 850, and an entire system may be made up of multiple computing devices 800, 850 communicating with each other.

Computing device 850 includes a processor 852, memory 864, an input/output device such as a display 854, a communication interface 866, and a transceiver 868, among other components. The device 850 may also be provided with a storage device, such as a microdrive or other device, to provide additional storage. Each of the components 850, 852, 864, 854, 866, and 868, are interconnected using various buses, and several of the components may be mounted on a common motherboard or in other manners as appropriate.

The processor 852 may execute instructions within the computing device 840, including instructions stored in the memory 864. The processor may be implemented as a chipset of chips that include separate and multiple analog and digital processors. The processor may provide, for example, for coordination of the other components of the device 850, such as control of user interfaces, applications run by device 850, and wireless communication by device 850.

Processor 852 may communicate with a user through control interface 848 and display interface 856 coupled to a display 854. The display 854 may be, for example, a TFT LCD (Thin-Film-Transistor Liquid Crystal Display) or an OLED (Organic Light Emitting Diode) display, or other appropriate display technology. The display interface 856 may comprise appropriate circuitry for driving the display 854 to present graphical and other information to a user. The control interface 858 may receive commands from a user and convert them for submission to the processor 852. In addition, an external interface 862 may be provide in communication with processor 852, so as to enable near area communication of device 850 with other devices. External interface 862 may provide, for example, for wired communication in some implementations, or for wireless communication in other implementations, and multiple interfaces may also be used.

The memory 864 stores information within the computing device 850. The memory 864 may be implemented as one or more of a computer-readable medium or media, a volatile memory unit or units, or a non-volatile memory unit or units. Expansion memory 854 may also be provided and connected to device 850 through expansion interface 852, which may include, for example, a SIMM (Single In Line Memory Module) card interface. Such expansion memory 854 may provide extra storage space for device 850, or may also store applications or other information for device 850. Specifically, expansion memory 854 may include instructions to carry out or supplement the processes described above, and may include secure information also. Thus, for example, expansion memory 854 may be provide as a security module for device 850, and may be programmed with instructions that permit secure use of device 850. In addition, secure applications may be provided via the SIMM cards, along with additional information, such as placing identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 864, expansion memory 854, memory on processor 852, or a propagated signal that may be received, for example, over transceiver 868 or external interface 862.

Device 850 may communicate wirelessly through communication interface 866, which may include digital signal processing circuitry where necessary. Communication interface 866 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 868. In addition, short-range communication may occur, such as using a Bluetooth, WiFi, or other such transceiver (not shown). In addition, GPS (Global Positioning System) receiver module 850 may provide additional navigation- and location-related wireless data to device 850, which may be used as appropriate by applications running on device 850.

Device 850 may also communicate audibly using audio codec 860, which may receive spoken information from a user and convert it to usable digital information. Audio codec 860 may likewise generate audible sound for a user, such as through a speaker, e.g., in a handset of device 850. Such sound may include sound from voice telephone calls, may include recorded sound (e.g., voice messages, music files, etc.) and may also include sound generated by applications operating on device 850.

The computing device 850 may be implemented in a number of different forms, as shown in the figure. For example, it may be implemented as a cellular telephone 880. It may also be implemented as part of a smartphone 882, personal digital assistant, or other similar mobile device.

Various implementations of the systems and techniques described here may be realized in digital electronic circuitry, integrated circuitry, specially designed ASICs (application specific integrated circuits), computer hardware, firmware, software, and/or combinations thereof. These various implementations may include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and may be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here may be implemented on a computer having a display device (e.g., a CRT (cathode ray tube) or LCD (liquid crystal display) monitor) for displaying information to the user and a keyboard and a pointing device (e.g., a mouse or a trackball) by which the user may provide input to the computer. Other kinds of devices may be used to provide for interaction with a user as well; for example, feedback provided to the user may be any form of sensory feedback (e.g., visual feedback, auditory feedback, or tactile feedback); and input from the user may be received in any form, including acoustic, speech, or tactile input.

The systems and techniques described here may be implemented in a computing system that includes a back end component (e.g., as a data server), or that includes a middleware component (e.g., an application server), or that includes a front end component (e.g., a client computer having a graphical user interface or a Web browser through which a user may interact with an implementation of the systems and techniques described here), or any combination of such back end, middleware, or front end components. The components of the system may be interconnected by any form or medium of digital data communication (e.g., a communication network). Examples of communication networks include a local area network ("LAN"), a wide area network ("WAN"), and the Internet.

The computing system may include clients and servers. A client and server are generally remote from each other and typically interact through a communication network. The relationship of client and server arises by virtue of computer programs running on the respective computers and having a client-server relationship to each other.

While this disclosure includes some specifics, these should not be construed as limitations on the scope of the disclosure or of what may be claimed, but rather as descriptions of features of example implementations of the disclosure. Certain features that are described in this disclosure in the context of separate implementations can also be provided in combination in a single implementation. Conversely, various features that are described in the context of a single implementation can also be provided in multiple implementations separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

Thus, particular implementations of the present disclosure have been described. Other implementations are within the scope of the following claims. For example, the actions recited in the claims can be performed in a different order and still achieve desirable results. A number of implementations have been described. Nevertheless, it will be understood that various modifications may 2. be made. 2.

For example, various forms of the flows shown above may be used, with steps re-ordered, added, or removed.

2. The invention is defined by the appended claims.

## Claims

1. A computer-implemented method, comprising
providing a publisher (102) 2. with a privacy control user interface (110) that includes
one or more controls that enable the publisher to assign one privacy wall (114) to each domain-purpose pair (112) wherein a domain-purpose pair comprises a combination of an online domain that can collect user data and a purpose for which that user data is potentially used and wherein a privacy wall allows, in its active state electronic transmission of electronic content of a domain of a domain-purpose pair associated with the privacy wall;
determining that the publisher has created, via the privacy control user interface, an additional privacy wall (116) for a specific domain-purpose pair that already has an existing privacy wall (114);
in response to determining that the publisher has created the additional privacy wall, restricting the specific domain-purpose pair to a single active privacy wall, by:
enabling only one of the existing privacy wall and the additional privacy wall to be in an active state at any given time; and
maintaining any privacy wall that is not in the active state in an inactive state;
detecting a transition of a specific privacy wall from the inactive state to the active state;
in response to detecting the transition of the specific privacy wall from the inactive state to the active state, transitioning a different privacy wall from the active state to the inactive state.

2. The method of any of the preceding claims, further comprising:
triggering display of a warning message in response to creation of the additional privacy wall while another privacy wall is in the active state; and
setting the additional privacy wall to the inactive state when creation of the additional wall occurs while another privacy wall is in the active state.

3. The method of any of the preceding claims, further comprising:
providing a control that enables the publisher to create a vendor list for a specified purpose;
monitoring a number of vendors added to the vendor list for the specified purpose;
triggering display of a warning message when the publisher attempts to increase the number of vendors in the vendor list for the specified purpose beyond a specified maximum number of vendors;
and optionally wherein providing the control that enables the publisher to create the vendor list comprises providing one or more controls that enables the publisher to create a different vendor list for each of two or more different purposes.

4. The method of any of the preceding claims, further comprising:
detecting user interaction with a consent element presented in a specific privacy wall presented at a client device of a specific user;
storing, in a cookie, consent data indicating that the specific user has consented to the use of user data for a given purpose corresponding to the domain-purpose pair; and
enabling the user data of the specific user to be used for the given purpose while the consent of the specific user is valid;
and optionally further comprising:
in response to detecting user interaction with the consent element, starting a consent validity timer for the domain-purpose pair;
when the consent validity timer reaches a pre-specified value, resetting the consent for the domain-purpose pair; and
after resetting the consent for the domain-purpose pair, requiring (i) presentation of the specific privacy wall or a different privacy wall, and (ii) a new interaction with the consent element prior to use of the user data of the specific user for the given purpose corresponding to the domain-purpose pair.

5. The method of claim 4, wherein storing the consent data indicating that the specific user has consented to the use of user data in the cookie comprises storing the consent data in the publisher's domain with a default naming convention that enables other entities that differ from the publisher to read the cookie;
and/or wherein the method further comprises storing, within the cookie, a list of third party identifiers and a corresponding consent identifier for each third party identified by the third party identifiers, wherein the consent identifier specifies whether the specific user has consented to that third party using the user data of the specific user.

6. The method of any of claims 4 to 5, further comprising:
triggering presentation of a change consent control that is presented on a publisher's page for the publisher after the specific user has consented to the use of the user data by the publisher;
detecting user interaction with the change consent control that enables the specific user to change their consent selection;
detecting user interaction with a revoke consent control that revokes a prior consent to the use of the user data by the publisher; and
updating the cookie to indicate that the specific user does not consent to the publisher using the user data.

7. The method of any of claims 4 to 6 when dependent directly or indirectly from claim 3, comprising:
after storing the consent data in the cookie, determining that the vendor list of the publisher has been modified to add an additional vendor;
in response to determining that the vendor list has been modified to add the additional vendor, triggering presentation of a new instance of a privacy wall that requests renewed consent from the specific user and informing the specific user of the additional vendor that was added to the vendor list;
and optionally further comprising:
detecting user interaction with a non-consent control indicating that the specific user does not consent to use of the user data by the additional vendor; and
in response to detecting the user interaction with the non-consent control, updating the cookie to indicate that the specific user does not consent to the use of the user data for the domain-purpose pair corresponding to the vendor list.

8. The method of any of the preceding claims, further comprising triggering presentation of the specific privacy wall to include both of an explore consent control and a purchase ad removal pass control, wherein user interaction with the explore consent control triggers presentation of data related to consent options and interaction with the purchase ad removal pass initiates a workflow that enables the specific user to obtain an ad free experience.

9. The method of claim 8, wherein interaction with the explore consent control triggers presentation of a user interface that includes multiple different opt-in options for granting consent to use user data;
and optionally wherein the user interface lists one or more purposes that are capable of using the user data and corresponding domains that utilize the one or more purposes, and wherein the user interface includes controls to selectively consent to the user data by one or more of the corresponding domains for each of the one or more purposes.

10. The method of any of claims 8 to 9, wherein triggering presentation of the specific privacy wall is performed in response to detecting that the user device has a specified geographic location indicator.

11. The method of any of claims 4 to 10, wherein storing the consent data in the cookie comprises storing a consent record entry that lists a set of consented third parties that the specific user has consented to using the user data and a set of unconsented third parties that the specific user has not consented to using the user data;
and/or wherein the cookie comprises a counter value specifying how long it has been since the specific user provided consent;
and/or wherein the cookie comprises a set of vendors that are included in vendor lists for the set of consented third parties and a different set of vendors that are included in the vendor lists for the set of unconsented third parties.

12. The method of any of claims 4 to 11, further comprising:
receiving, from the client device, a request for a page provided by the publisher;
inspecting the cookie in response to the request;
determining, based on the inspection of the cookie, a current consent status of the specific user relative to use of the user data for at least one domain-purpose pair; and
responding to the request based on the current consent status;
and optionally wherein responding to the request based on the current consent status comprises:
responding to the request by triggering presentation of the page in response to determining that the current consent status allows for the publisher to load the page without prompting the user for consent; and
responding to the request by triggering presentation of the specific privacy wall instead of the page in response to determining that the current consent status does not allow for the publisher to load the page without prompting the user for consent;

13. The method of claim 12, wherein determining the current consent status of the specific user comprises triggering a script that invokes a script that inspects the cookie for the current consent status.

14. The method of claim 13, wherein triggering the script comprises triggering a script that determines whether the cookie exists for the specified user, a last refresh time for the cookie, and a geographic location of the client device.

15. The method of claim 14 when dependent directly or indirectly from claim 3, further comprising, in response to determining that the last refresh time for the cookie is not within a specified period, refreshing the cookie with information about vendors that are included in the vendor list of the publisher;
and optionally, either further comprising, in response to determining that the vendors included in the vendor list of the publisher match the set of vendors identified in the cookie, refreshing the cookie and not requiring presentation of an update consent user interface;
or further comprising, in response to determining that the vendors included in the vendor list of the publisher do not match the set of vendors identified in the cookie, refreshing the cookie and requiring presentation of an update consent user interface.

## Patentansprüche

1. Computerimplementiertes Verfahren, umfassend:
Bereitstellen eines Herausgebers (102) mit einer Privatsphärensteuerung-Benutzerschnittstelle (110), die ein oder mehrere Bedienelemente einschließt, die dem Herausgeber ermöglichen, jedem Domäne-Zweck-Paar (112) eine Privatsphärenwand (114) zuzuweisen, wobei ein Domäne-Zweck-Paar eine Kombination aus einer Online-Domäne, die Benutzerdaten sammeln kann, und einem Zweck, für den diese Benutzerdaten potenziell verwendet werden, umfasst, und wobei eine Privatsphärenwand in ihrem aktiven Zustand die elektronische Übertragung von elektronischem Inhalt einer Domäne eines mit der Privatsphärenwand assoziierten Domäne-Zweck-Paars erlaubt;
Bestimmen, dass der Herausgeber mittels der Privatsphärensteuerung-Benutzerschnittstelle eine zusätzliche Privatsphärenwand (116) für ein spezifisches Domäne-Zweck-Paar erzeugt hat, das bereits eine bestehende Privatsphärenwand (114) hat;
als Antwort auf das Bestimmen, dass der Herausgeber die zusätzliche Privatsphärenwand erzeugt hat, erfolgendes Beschränken des spezifischen Domäne-Zweck-Paars auf eine einzige aktive Privatsphärenwand, und zwar durch:
nur einer der bestehenden Privatsphärenwand und der zusätzlichen Privatsphärenwand Ermöglichen, zu jeglichem gegebenen Zeitpunkt in einem aktiven Zustand zu sein; und
Beibehalten einer beliebigen Privatsphärenwand, die nicht im aktiven Zustand ist, in einem inaktiven Zustand;
Ermitteln eines Übergangs einer spezifischen Privatsphärenwand aus dem inaktiven Zustand in den aktiven Zustand;
als Antwort auf das Ermitteln des Übergangs der spezifischen Privatsphärenwand aus dem inaktiven Zustand in den aktiven Zustand erfolgendes Überführen einer anderen Privatsphärenwand aus dem aktiven Zustand in den inaktiven Zustand.

2. Verfahren nach einem der vorhergehenden Ansprüche, ferner umfassend:
Auslösen der Anzeige einer Warnmeldung als Antwort auf die Erzeugung der zusätzlichen Privatsphärenwand, während eine andere Privatsphärenwand im aktiven Zustand ist; und
Versetzen der zusätzlichen Privatsphärenwand in den inaktiven Zustand, wenn die Erzeugung der zusätzlichen Wand erfolgt, während eine andere Privatsphärenwand im aktiven Zustand ist.

3. Verfahren nach einem der vorhergehenden Ansprüche, ferner umfassend:
Bereitstellen eines Bedienelements, das dem Herausgeber ermöglicht, eine Anbieterliste für einen angegebenen Zweck zu erzeugen;
Überwachen einer Anzahl von Anbietern, die zu der Anbieterliste für den angegebenen Zweck hinzugefügt wurden;
Auslösen der Anzeige einer Warnmeldung, wenn der Herausgeber versucht, die Anzahl der Anbieter in der Anbieterliste für den angegebenen Zweck über eine angegebene Höchstzahl von Anbietern hinaus zu erhöhen;
und wobei optional das Bereitstellen des Bedienelements, das dem Herausgeber ermöglicht, die Anbieterliste zu erzeugen, umfasst: Bereitstellen von einem oder mehreren Bedienelementen, die dem Herausgeber ermöglichen, für jeden von zwei oder mehreren unterschiedlichen Zwecken eine andere Anbieterliste zu erzeugen.

4. Verfahren nach einem der vorhergehenden Ansprüche, ferner umfassend:
Ermitteln von Benutzerinteraktion mit einem Einwilligungselement, das in einer spezifischen Privatsphärenwand präsentiert wird, die auf einer Client-Vorrichtung eines spezifischen Benutzers präsentiert wird;
Speichern von Einwilligungsdaten in einem Cookie, die kennzeichnen, dass der spezifische Benutzer in die Verwendung von Benutzerdaten für einen gegebenen Zweck, der dem Domäne-Zweck-Paar entspricht, eingewilligt hat; und
Ermöglichen, dass die Benutzerdaten des spezifischen Benutzers für den gegebenen Zweck verwendet werden, solange die Einwilligung des spezifischen Benutzers gültig ist;
und optional ferner umfassend:
als Antwort auf das Ermitteln einer Benutzerinteraktion mit dem Einwilligungselement erfolgendes Starten eines Einwilligungsgültigkeitszeitgebers für das Domäne-Zweck-Paar;
wenn der Einwilligungsgültigkeitszeitgeber einen vorher angegebenen Wert erreicht, Zurücksetzen der Einwilligung für das Domäne-Zweck-Paar; und
nach dem Zurücksetzen der Einwilligung für das Domäne-Zweck-Paar erfolgendes Erfordern (i) der Präsentation der spezifischen Privatsphärenwand oder einer anderen Privatsphärenwand und (ii) einer neuen Interaktion mit dem Einwilligungselement vor der Verwendung der Benutzerdaten des spezifischen Benutzers für den gegebenen Zweck, der dem Domäne-Zweck-Paar entspricht.

5. Verfahren nach Anspruch 4, wobei das Speichern der Einwilligungsdaten, die kennzeichnen, dass der spezifische Benutzer in die Verwendung von Benutzerdaten im Cookie eingewilligt hat, umfasst: Speichern der Einwilligungsdaten in der Domäne des Herausgebers mit einer Standardbenennungskonvention, die es anderen Entitäten, die sich vom Herausgeber unterscheiden, ermöglicht, das Cookie zu lesen;
und/oder wobei das Verfahren ferner umfasst: Speichern einer Liste von Kennungen Dritter und einer entsprechenden Einwilligungskennung für jeden durch die Kennungen Dritter identifizierten Dritten im Cookie, wobei die Einwilligungskennung kennzeichnet, ob der spezifische Benutzer darin eingewilligt hat, dass dieser Dritte die Benutzerdaten des spezifischen Benutzers verwendet.

6. Verfahren nach einem der Ansprüche 4 bis 5, ferner umfassend:
Auslösen der Präsentation eines Änderungseinwilligung-Bedienelements, das auf einer Herausgeberseite für den Herausgeber präsentiert wird, nachdem der spezifische Benutzer in die Verwendung der Benutzerdaten durch den Herausgeber eingewilligt hat;
Ermitteln von Benutzerinteraktion mit dem Änderungseinwilligung-Bedienelement, das dem spezifischen Benutzer ermöglicht, seine Einwilligungsauswahl zu ändern;
Ermitteln von Benutzerinteraktion mit einem Einwilligungswiderruf-Bedienelement, das eine Einwilligung vor der Verwendung der Benutzerdaten durch den Herausgeber widerruft; und
Aktualisieren des Cookies, um zu kennzeichnen, dass der spezifische Benutzer nicht in die Verwendung der Benutzerdaten durch den Herausgeber einwilligt.

7. Verfahren nach einem der Ansprüche 4 bis 6, wenn direkt oder indirekt von Anspruch 3 abhängig, umfassend:
nach dem Speichern der Einwilligungsdaten im Cookie erfolgendes Bestimmen, dass die Anbieterliste des Herausgebers modifiziert worden ist, um einen zusätzlichen Anbieter hinzuzufügen;
als Antwort auf das Bestimmen, dass die Anbieterliste modifiziert worden ist, um den zusätzlichen Anbieter hinzuzufügen, erfolgendes Auslösen der Präsentation einer neuen Instanz einer Privatsphärenwand, die eine erneuerte Einwilligung von dem spezifischen Benutzer anfordert, und Informieren des spezifischen Benutzers über den zusätzlichen Anbieter, welcher der Anbieterliste hinzugefügt wurde;
und optional ferner umfassend:
Ermitteln von Benutzerinteraktion mit einem Nichteinwilligung-Bedienelement, das kennzeichnet, dass der spezifische Benutzer nicht in die Verwendung der Benutzerdaten durch den zusätzlichen Anbieter einwilligt; und
als Antwort auf das Ermitteln der Benutzerinteraktion mit dem Nichteinwilligung-Bedienelement erfolgendes Aktualisieren des Cookies, um zu kennzeichnen, dass der spezifische Benutzer nicht in die Verwendung der Benutzerdaten für das der Anbieterliste entsprechende Domäne-Zweck-Paar einwilligt.

8. Verfahren nach einem der vorhergehenden Ansprüche, ferner umfassend: Auslösen einer Präsentation der spezifischen Privatsphärenwand, um sowohl ein Einwilligungserkundung-Bedienelement als auch ein Bedienelement zum Kaufen eines Anzeigenbeseitigungsabonnements einzuschließen, wobei Benutzerinteraktion mit dem Einwilligungserkundung-Bedienelement die Präsentation von Daten auslöst, die sich auf Einwilligungsoptionen beziehen, und Interaktion mit dem Kauf eines Anzeigenbeseitigungsabonnements einen Arbeitsablauf einleitet, der dem spezifischen Benutzer ermöglicht, ein werbefreies Erlebnis zu erlangen.

9. Verfahren nach Anspruch 8, wobei Interaktion mit dem Einwilligungserkundung-Bedienelement die Präsentation einer Benutzerschnittstelle auslöst, die mehrere verschiedene Opt-in-Optionen für die Erteilung der Einwilligung in die Verwendung der Benutzerdaten einschließt;
und wobei optional die Benutzerschnittstelle einen oder mehrere Zwecke, die zum Verwenden der Benutzerdaten imstande sind, und entsprechende Domänen, die den einen oder die mehreren Zwecke nutzen, auflistet, und wobei die Benutzerschnittstelle Bedienelemente einschließt, um selektiv zur Benutzerdaten durch eine oder mehrere der entsprechenden Domänen für jeden der einen oder mehreren Zwecke einzuwilligen.

10. Verfahren nach einem der Ansprüche 8 bis 9, wobei das Auslösen einer Präsentation der spezifischen Privatsphärenwand als Antwort auf das Ermitteln durchgeführt wird, dass die Benutzervorrichtung einen angegebenen geografischen Standortindikator hat.

11. Verfahren nach einem der Ansprüche 4 bis 10, wobei das Speichern der Einwilligungsdaten im Cookie umfasst: Speichern eines Einwilligungsdatensatzeintrags, der eine Menge von akzeptierten Dritten, denen der spezifische Benutzer die Verwendung der Benutzerdaten gestattet hat, und eine Menge von nicht akzeptierten Dritten, denen der spezifische Benutzer die Verwendung der Benutzerdaten nicht gestattet hat, auflistet;
und/oder wobei das Cookie einen Zählerwert umfasst, der kennzeichnet, wie lange es her ist, dass der spezifische Benutzer seine Einwilligung bereitgestellt hat;
und/oder wobei das Cookie eine Menge von Anbietern, die in Anbieterlisten für die Menge von akzeptierten Dritten eingeschlossen sind, und eine andere Menge von Anbietern, die in den Anbieterlisten für die Menge von nicht akzeptierten Dritten eingeschlossen sind, umfasst.

12. Verfahren nach einem der Ansprüche 4 bis 11, ferner umfassend:
Empfangen einer Anforderung für eine durch den Herausgeber bereitgestellte Seite von der Client-Vorrichtung;
Untersuchen des Cookies als Antwort auf die Anforderung;
auf der Untersuchung des Cookies beruhendes Bestimmen eines aktuellen Einwilligungsstatus des spezifischen Benutzers in Bezug auf die Verwendung der Benutzerdaten für mindestens ein Domäne-Zweck-Paar; und
Reagieren auf die Anforderung auf der Grundlage des aktuellen Einwilligungsstatus;
und wobei optional das Reagieren auf der Grundlage des aktuellen Einwilligungsstatus umfasst:
Reagieren auf die Anforderung durch Auslösen der Präsentation der Seite als Reaktion auf die Bestimmung, dass der aktuelle Einwilligungsstatus dem Herausgeber erlaubt, die Seite zu laden, ohne den Benutzer zur Einwilligung aufzufordern; und
Reagieren auf die Anforderung durch Auslösen der Präsentation der spezifischen Privatsphärenwand anstelle der Seite als Antwort auf die Bestimmung, dass der aktuelle Einwilligungsstatus dem Herausgeber nicht erlaubt, die Seite zu laden, ohne den Benutzer zur Einwilligung aufzufordern.

13. Verfahren nach Anspruch 12, wobei das Bestimmen des aktuellen Einwilligungsstatus des spezifischen Benutzers umfasst: Auslösen eines Skripts, das ein Skript aufruft, welches das Cookie auf den aktuellen Einwilligungsstatus untersucht.

14. Verfahren nach Anspruch 13, wobei das Auslösen des Skripts umfasst: Auslösen eines Skripts, welches bestimmt: ob das Cookie für den angegebenen Benutzer existiert, eine letzte Auffrischungszeit für das Cookie und einen geografischen Standort der Client-Vorrichtung.

15. Verfahren nach Anspruch 14, wenn direkt oder indirekt von Anspruch 3 abhängig, ferner umfassend: als Antwort auf das Bestimmen, dass die letzte Auffrischungszeit für das Cookie nicht innerhalb eines angegebenen Zeitraums liegt, erfolgendes Auffrischen des Cookies mit Informationen über Anbieter, die in der Anbieterliste des Herausgebers eingeschlossen sind;
und optional entweder ferner umfassend: als Antwort auf das Bestimmen, dass die in der Anbieterliste des Herausgebers eingeschlossenen Anbieter mit der im Cookie identifizierten Menge von Anbietern übereinstimmen, erfolgendes Auffrischen des Cookies ohne Erfordern der Präsentation einer Einwilligungsaktualisierung-Benutzerschnittstelle;
oder ferner umfassend: als Antwort auf das Bestimmen, dass die in der Anbieterliste des Herausgebers eingeschlossenen Anbieter nicht mit der im Cookie identifizierten Menge von Anbietern übereinstimmen, erfolgendes Auffrischen des Cookies und Erfordern der Präsentation einer Einwilligungsaktualisierung-Benutzerschnittstelle.

## Revendications

1. Procédé mis en œuvre par ordinateur, comprenant :
la fourniture d'un éditeur (102) qui est muni d'une interface utilisateur de commande de confidentialité (110) qui inclut une ou plusieurs commandes qui permettent à l'éditeur d'attribuer un mur de confidentialité (114) à chaque paire domaine-finalité (112), dans lequel une paire domaine-finalité comprend une combinaison d'un domaine en ligne qui peut collecter des données d'utilisateur et d'une finalité pour laquelle les données d'utilisateur sont potentiellement utilisées, et dans lequel un mur de confidentialité permet, dans son état actif, la transmission électronique de contenu électronique d'un domaine d'une paire domaine-finalité qui est associée au mur de confidentialité ;
la détermination du fait que l'éditeur a créé, via l'interface utilisateur de commande de confidentialité, un mur de confidentialité additionnel (116) pour une paire domaine-finalité spécifique qui dispose déjà d'un mur de confidentialité existant (114) ;
en réponse à la détermination du fait que l'éditeur a créé le mur de confidentialité additionnel, la restriction de la paire domaine-finalité spécifique à un unique mur de confidentialité actif, en :
permettant que seulement un parmi le mur de confidentialité existant et le mur de confidentialité additionnel soit dans un état actif à un quelconque instant donné ; et en
maintenant un quelconque mur de confidentialité, qui n'est pas dans l'état actif, dans un état inactif ;
la détection d'une transition d'un mur de confidentialité spécifique de l'état inactif à l'état actif ;
en réponse à la détection de la transition du mur de confidentialité spécifique de l'état inactif à l'état actif, la transition d'un mur de confidentialité différent de l'état actif à l'état inactif.

2. Procédé selon l'une quelconque des revendications précédentes, comprenant en outre :
le déclenchement de l'affichage d'un message d'avertissement en réponse à la création du mur de confidentialité additionnel tandis qu'un autre mur de confidentialité est dans l'état actif ; et
le placement du mur de confidentialité additionnel dans l'état inactif lorsque la création du mur additionnel survient tandis qu'un autre mur de confidentialité est dans l'état actif.

3. Procédé selon l'une quelconque des revendications précédentes, comprenant en outre :
la fourniture d'une commande qui permet que l'éditeur crée une liste de fournisseurs pour une finalité spécifiée ;
la surveillance d'un nombre de fournisseurs qui sont ajoutés à la liste de fournisseurs pour la finalité spécifiée ;
le déclenchement de l'affichage d'un message d'avertissement lorsque l'éditeur tente d'augmenter le nombre de fournisseurs dans la liste de fournisseurs pour la finalité spécifiée au-delà d'un nombre de fournisseurs maximum spécifié ;
et facultativement, dans lequel la fourniture de la commande qui permet à l'éditeur de créer la liste de fournisseurs comprend la fourniture d'une ou de plusieurs commandes qui permettent à l'éditeur de créer une liste de fournisseurs différente pour chacune de deux finalités différentes ou plus.

4. Procédé selon l'une quelconque des revendications précédentes, comprenant en outre :
la détection d'une interaction d'utilisateur avec un élément de consentement qui est présenté dans un mur de confidentialité spécifique qui est présenté au niveau d'un dispositif client d'un utilisateur spécifique ;
le stockage, dans un cookie, de données de consentement qui indiquent que l'utilisateur spécifique a consenti à l'utilisation de données d'utilisateur pour une finalité donnée qui correspond à la paire domaine-finalité ; et
l'autorisation de l'utilisation des données d'utilisateur de l'utilisateur spécifique pour la finalité donnée pendant que le consentement de l'utilisateur spécifique est valide ;
et facultativement, comprenant en outre :
en réponse à la détection d'une interaction d'utilisateur avec l'élément de consentement, le démarrage d'un temporisateur de validité de consentement pour la paire domaine-finalité ;
lorsque le temporisateur de validité de consentement atteint une valeur pré-spécifiée, la réinitialisation du consentement pour la paire domaine-finalité ; et
après la réinitialisation du consentement pour la paire domaine-finalité, la formulation d'une requête demandant (i) la présentation du mur de confidentialité spécifique ou d'un mur de confidentialité différent et (ii) une nouvelle interaction avec l'élément de consentement avant l'utilisation des données d'utilisateur de l'utilisateur spécifique pour la finalité donnée qui correspond à la paire domaine-finalité.

5. Procédé selon la revendication 4, dans lequel le stockage des données de consentement qui indiquent que l'utilisateur spécifique a consenti à l'utilisation de données d'utilisateur dans le cookie comprend le stockage des données de consentement dans le domaine de l'éditeur selon une convention de dénomination par défaut qui permet à d'autres entités qui diffèrent de l'éditeur de lire le cookie ;
et/ou dans lequel le procédé comprend en outre le stockage, à l'intérieur du cookie, d'une liste d'identifiants de tierce partie et d'un identifiant de consentement correspondant pour chaque tierce partie qui est identifiée au moyen des identifiants de tierce partie, dans lequel l'identifiant de consentement spécifie si oui ou non l'utilisateur spécifique a consenti à ce que cette tierce partie utilise les données d'utilisateur de l'utilisateur spécifique.

6. Procédé selon l'une quelconque des revendications 4 et 5, comprenant en outre :
le déclenchement de la présentation d'une commande de modification de consentement qui est présentée sur une page de l'éditeur pour l'éditeur après que l'utilisateur spécifique a consenti à l'utilisation des données d'utilisateur par l'éditeur ;
la détection d'une interaction d'utilisateur avec la commande de modification de consentement qui permet que l'utilisateur spécifique modifie sa sélection de consentement ;
la détection d'une interaction d'utilisateur avec une commande de révocation de consentement qui révoque un consentement antérieur à l'utilisation des données d'utilisateur par l'éditeur ; et
la mise à jour du cookie pour indiquer que l'utilisateur spécifique ne consent pas à l'utilisation des données d'utilisateur par l'éditeur.

7. Procédé selon l'une quelconque des revendications 4 à 6 lorsqu'elle dépend directement ou indirectement de la revendication 3, comprenant les étapes consistant à :
après le stockage des données de consentement dans le cookie, déterminer que la liste de fournisseurs de l'éditeur a été modifiée pour ajouter un fournisseur additionnel ;
en réponse à la détermination du fait que la liste de fournisseurs a été modifiée pour ajouter le fournisseur additionnel, déclencher la présentation d'une nouvelle occurrence d'un mur de confidentialité qui formule une requête demandant un consentement renouvelé de la part de l'utilisateur spécifique et informer l'utilisateur spécifique du fournisseur additionnel qui a été ajouté à la liste de fournisseurs ;
et facultativement, comprenant en outre les étapes consistant à :
la détection d'une interaction d'utilisateur avec une commande de non consentement qui indique que l'utilisateur spécifique ne consent pas à l'utilisation des données d'utilisateur par le fournisseur additionnel ; et
en réponse à la détection de l'interaction d'utilisateur avec la commande de non consentement, la mise à jour du cookie pour indiquer que l'utilisateur spécifique ne consent pas à l'utilisation des données d'utilisateur pour la paire domaine-finalité qui correspond à la liste de fournisseurs.

8. Procédé selon l'une quelconque des revendications précédentes, comprenant en outre le déclenchement d'une présentation du mur de confidentialité spécifique de telle sorte qu'il inclue à la fois une commande d'exploration de consentement et une commande d'achat d'abonnement pour retrait de publicités, dans lequel une interaction d'utilisateur avec la commande d'exploration de consentement déclenche la présentation de données qui sont rapportées à des options de consentement, et une interaction avec l'achat d'abonnement pour retrait de publicités initie un déroulement d'opérations qui permettent à l'utilisateur spécifique d'obtenir une expérience sans publicités.

9. Procédé selon la revendication 8, dans lequel une interaction avec la commande d'exploration de consentement déclenche la présentation d'une interface utilisateur qui inclut plusieurs options à acceptation facultative différentes pour octroyer un consentement pour l'utilisation des données d'utilisateur ; et
en facultativement, dans lequel l'interface utilisateur liste une ou plusieurs finalités qui sont capables d'utiliser les données d'utilisateur et des domaines correspondants qui utilisent les une ou plusieurs finalités, et dans lequel l'interface utilisateur inclut des commandes pour consentir de façon sélective aux données d'utilisateur par un ou plusieurs des domaines correspondants pour chacune des une ou plusieurs finalités.

10. Procédé selon l'une quelconque des revendications 8 et 9, dans lequel le déclenchement d'une présentation du mur de confidentialité spécifique est réalisé en réponse à la détection du fait que le dispositif d'utilisateur dispose d'un indicateur de localisation géographique spécifié.

11. Procédé selon l'une quelconque des revendications 4 à 10, dans lequel le stockage des données de consentement dans le cookie comprend le stockage d'une entrée d'enregistrement de consentement qui liste un jeu de tierces parties qui ont fait l'objet d'un consentement et pour lesquelles l'utilisateur spécifique a consenti à l'utilisation des données d'utilisateur et un jeu de tierces parties qui n'ont pas fait l'objet d'un consentement et pour lesquelles l'utilisateur spécifique n'a pas consenti à l'utilisation des données d'utilisateur ;
et/ou dans lequel le cookie comprend une valeur de compteur qui spécifie la durée écoulée depuis que l'utilisateur spécifique a fourni son consentement ;
et/ou dans lequel le cookie comprend un jeu de fournisseurs qui sont inclus dans des listes de fournisseurs pour le jeu de tierces parties qui ont fait l'objet d'un consentement et un jeu de fournisseurs différent qui sont inclus dans les listes de fournisseurs pour le jeu de tierces parties qui n'ont pas fait l'objet d'un consentement.

12. Procédé selon l'une quelconque des revendications 4 à 11, comprenant en outre :
la réception, en provenance du dispositif client, d'une requête demandant une page qui est fournie par l'éditeur ;
l'inspection du cookie en réponse à la requête ;
la détermination, sur la base de l'inspection du cookie, d'un état de consentement actuel de l'utilisateur spécifique en relation avec l'utilisation des données d'utilisateur pour au moins une paire domaine-finalité ; et
la réponse à la requête sur la base de l'état de consentement actuel ;
et facultativement dans lequel la réponse à la requête sur la base de l'état de consentement actuel comprend :
la réponse à la requête en déclenchant la présentation de la page en réponse à la détermination du fait que l'état de consentement actuel permet à l'éditeur de télécharger la page sans demander son consentement à l'utilisateur ; et
la réponse à la requête en déclenchant la présentation du mur de confidentialité spécifique à la place de la page en réponse à la détermination du fait que l'état de consentement actuel ne permet pas à l'éditeur de télécharger la page sans demander son consentement à l'utilisateur.

13. Procédé selon la revendication 12, dans lequel la détermination de l'état de consentement actuel de l'utilisateur spécifique comprend le déclenchement d'un script qui invoque un script qui inspecte le cookie quant à l'état de consentement actuel.

14. Procédé selon la revendication 13, dans lequel le déclenchement du script comprend le déclenchement d'un script qui détermine si oui ou non le cookie existe pour l'utilisateur spécifié, un dernier instant de rafraîchissement du cookie et une localisation géographique du dispositif client.

15. Procédé selon la revendication 14 lorsqu'elle dépend directement ou indirectement de la revendication 3, comprenant en outre : en réponse à la détermination du fait que le dernier instant de rafraîchissement du cookie ne s'inscrit pas à l'intérieur d'une période spécifiée, le rafraîchissement du cookie à l'aide d'informations qui concernent les fournisseurs qui sont inclus dans la liste de fournisseurs de l'éditeur ;
et facultativement, soit comprenant en outre : en réponse à la détermination du fait que les fournisseurs qui sont inclus dans la liste de fournisseurs de l'éditeur concordent avec le jeu de fournisseurs qui sont identifiés dans le cookie, le rafraîchissement du cookie et l'absence de formulation d'une requête demandant la présentation d'une interface utilisateur de mise à jour de consentement ;
soit comprenant en outre, en réponse à la détermination du fait que les fournisseurs qui sont inclus dans la liste de fournisseurs de l'éditeur ne concordent pas avec le jeu de fournisseurs qui sont identifiés dans le cookie, le rafraîchissement du cookie et la formulation d'une requête demandant la présentation d'une interface utilisateur de mise à jour de consentement.
